# DEMANDE DE BREVET EUROPEEN

(11) **EP 1 862 435 A1**
(43) Date de publication de la demande: **05.12.2007**
(21) Numéro de dépôt: 07301081.1
(22) Date de dépôt: 31.05.2007
(51) Int. Cl.: C02F 1/72, C02F 101/30

(54) **Procédé de traitement d'un effluent phytosanitaire**

(30) Priorité: 01.06.2006 FR 0652002
(71) Demandeur: COMPTOIR COMMERCIAL DES LUBRIFIANTS (C.C.L.), 60880 Le Meux (FR)
(72) Inventeur: Blanchard, Marie-Pierre, 60200 Compiegne (FR); Parmentier, Jacques, 60350, Vieux Moulin (FR); Paillission, Philippe, 60200, Compiegne (FR)
(74) Mandataire: Catherine, Alain

(57) **Abrégé**

L'invention concerne un procédé de traitement d'un effluent phytosanitaire comprenant au moins une matière active choisie dans la famille des sulfonylurées caractérisé en ce qu'il consiste uniquement à mettre en contact ledit effluent physanitaire avec un agent oxydant.
L'agent oxydant est choisi parmi l'hypochlorite de sodium, le dioxyde de chlore, l'acide performique, l'eau oxygénée, le dichloroisocyanurate de sodium, le percarbonate de sodium et leurs mélanges.

Le procédé objet de l'invention permet de détruire les produits de traitement phytosanitaire contenus dans les effluents phytosanitaires issus de l'agriculture.

## Description

L'invention a trait au domaine du traitement des effluents phytosanitaires, et concerne en particulier un nouveau procédé de dégradation des effluents phytosanitaires d'origine agricole.

Après traitement d'une parcelle agricole par pulvérisation d'une bouillie contenant un produit phytosanitaire, un reliquat du produit phytosanitaire utilisé peut rester dans le matériel de pulvérisation employé. Ce reliquat est nommé effluent phytosanitaire et désigne en particulier les fonds de cuve, les bouillies phytosanitaires non utilisables, les eaux de nettoyage de matériel de pulvérisation résultants de traitements dans le domaine agricole.

Les effluents phytosanitaires sont considérées comme des déchets industriels, et la réglementation actuellement en vigueur, notamment en France, ne permet pas un rejet de ces effluents phytosanitaire dans l'environnement, sans précaution. Les effluents phytosanitaires sont donc généralement éliminés par « rinçage au champ », par exemple en effectuant une nouvelle pulvérisation de la parcelle déjà traitée, avec un effluent phytosanitaire qui aura été préalablement dilué avec de l'eau. L'effluent résultant de cette nouvelle pulvérisation peut ensuite être conservé pour la préparation suivante de bouillie de traitement.

Le rinçage au champ entraîne une perte de temps pour l'utilisateur, qui se voit contraint de réaliser deux pulvérisations successives d'une même parcelle. De plus, les effluents phytosanitaires contiennent parfois des molécules hautement actives à faible dose, qui peut conduire à un risque de toxicité pour la culture qui recevra une seconde pulvérisation. Enfin, l'utilisateur ne dispose pas nécessairement d'une réserve d'eau suffisante pour réaliser un rinçage au champ.

Une solution alternative au procédé de rinçage au champ décrit ci-dessus consiste à traiter les effluents phytosanitaires par séchage dans des cuves étanches. Cette solution nécessite cependant un investissement important, peu adapté à des exploitations agricoles de taille moyenne.

Dans ce contexte, plusieurs procédés de traitement des effluents phytosanitaires ont été décrits pour réduire la toxicité ou détruire les matières actives contenues dans ces effluents. L'une des solutions consiste à traiter les effluents phytosanitaires dans un bac étanche, le plus souvent en béton contenant un substrat tel que de la terre et/ou de la paille qui va permettre une dégradation des matières actives contenues dans les effluents phytosanitaires.

L'utilisation d'un tel dispositif nécessite néanmoins un changement régulier du substrat utilisé et un épandage régulier du substrat sur des parcelles agricoles.

D'autres solutions ont été mises au point consistant par exemple à traiter les effluents phytosanitaires par du dioxyde de titane (TiO₂) ou du charbon actif. Ces solutions sont cependant assez lourdes à mettre en place pour des usages agricoles courants ou pour des exploitations de taille moyenne.

Un procédé de décontamination de matériaux souillés par des agents toxiques, mettant en oeuvre une composition à base de peracides a été décrite dans la demande de brevet FR2746020. Néanmoins, les compositions décrites comprennent, en plus d'un peracide, un tensioactif qui présente un risque de toxicité. L'utilisation de telles compositions pour le traitement d'un effluent phytosanitaire n'est donc pas adaptée dans le domaine agricole.

Il existe donc un besoin pour un procédé de traitement des effluents phytosanitaires qui soit à la fois facile à mettre en oeuvre, rapide et économiquement rentable, notamment pour les exploitants agricoles.

Le problème ci-dessus est résolu par le procédé de traitement d'un effluent phytosanitaire selon l'invention.

Selon l'invention, le procédé de traitement d'un effluent phytosanitaire comprend la mise en contact dudit effluent phytosanitaire avec un agent oxydant choisi parmi le dioxyde de chlore, le dichloroisocyanurate de sodium, le percarbonate de sodium et leurs mélanges.

On entend par « effluent phytosanitaire » les fonds de cuve, les bouillies phytosanitaires non utilisables, les eaux de nettoyage du matériel de pulvérisation, les eaux, effluents ou déchets ayant été en contact avec des produits phytosanitaires ainsi que les effluents liquides ou solides issus du traitement de ces fonds de cuve, bouillies, eaux ou effluents.

Par « fond de cuve », on entend, au sens de la présente invention, la bouillie phytosanitaire restant dans l'appareil de pulvérisation après épandage et désamorçage du pulvérisateur, qui, pour des raisons techniques liées à la conception de l'appareil de pulvérisation, n'est pas pulvérisable.

Le procédé de traitement mis au point par le demandeur permet non seulement de traiter les effluents phytosanitaires, mais également les produits phytosanitaires eux-mêmes, dilués ou non.

De préférence, l'effluent phytosanitaire comprend au moins une matière active choisie dans la famille des sulfonylurées, et de préférence le metsulfuron méthyle, et le flazasulfuron.

Les effluents phytosanitaires pouvant être traités par le procédé objet de l'invention comprennent une ou plusieurs matières actives, choisies parmi les herbicides, les désherbants, les phytocides, les débrousaillants, les fongicides, les insecticides, les acaricides, les substances de croissance, tel que les régulateurs de croissance permettant de prévenir la croissance excessive d'une plante, les anti-germinants, les produits favorisant la résistance des plantes, le bouturage, ou la mise en fruit, mais également les molluscicides, nématicides, rodenticides, et taupicides. Les matières actives citées ci-dessus peuvent être choisies parmi les matières définies dans la directive 91/414CE du 15 juillet 1991 et/ou parmi 1,3-dichloropropène ; 2,4-D ; 2,4-D éthylhexyl ester ; 2,4-DB ; 4-CPA ; 6-benzyladenine ; 8-dodecenylacetate ; abamectine; acetamiprid ; acétates de Z/E 8-dodecenyl et de Z 8-dodecenol ; acétochlore ; acibenzolar S méthyl ; acide benzoique ; acide beta indolacetique ; acide indolyl butyrique ; acide naphtalene acétique ; acide naphtyloxyacétique ; aclonifen ; acrinathrine ; alachlore; aldicarbe ; alpha naphtalène acétamide ; alphamethrine ; alphanaphtylacetamide ; amidosulfuron ; aminotriazole ; anthraquinone ; asulame : sel sodique ; azimsulfuron ; azinphos-methyl ; azocyclotin ; azoxystrobine ; benalaxil ; benfluraline ; benfuracarbe ; benoxacor ; bensulfuron-methyle ; bentazone ; betacyflutrine ; bifenox ; bifenthrine ; bitertanol ; boscalid ; brodifacoum ; bromacil ; bromadiolone ; bromoxynil heptanoate ; bromoxynil octanoate ; bromoxynil phenol ; bromuconazole ; bromure de méthyle ; bupirimate ; buprofezine ; butraline; cadusafos; calciferol ; captane ; carbaryl ; carbendazime ; carbetamide ; carbofuran ; carbosulfan; carboxine ; carfentrazone éthyle ; chlorate de sodium ; hlorfenvinphos ; chloridazone ; chlormequat ; chlorofenizon ; chlorophacinone ; chlorothalonil ; chlorprophame ; chlorpyriphos-éthyle ; chlorpyriphos-méthyle ; chlorsulfuron ; chlorthal-dimethyl ; chlortoluron ; cinidon-ethyl ; clethodim ; clodinafop-propargyl ; clofentezine ; clomazone ; clopyralid ; cloquintocet-mexyl ; codlemone; colecalciferol; coumafene ; coumatetralyl ; crimidine ; cuivre de l'hydroxyde de cuivre ; cuivre de l'oxychlorure de cuivre ; cuivre de l'oxyde cuivreux ; cuivre du sulfate tribasique de cuivre ; cyanamide calcique ; cyazofamid ; cloxidime ; cyfluthrine ; cyhalofop butyl ; cyhexatin ;cymoxanil ; cypermethrine ; cyproconazole ; cyprodinil ; cyromazine ; daminozide ; dazomet ; deltamethrine ; depallethrine ; desmediphame ; di-1-p-menthene; diazinon ; dicamba ; dichlobenil ; dichlormide ;dichlorophene ; dichlorprop P ; dichlorvos ; diclofop methyl ; dicofol ;; diethion ; diethofencarbe ; difenacoum ; difenoconazole ; difethialone; diflubenzuron ; diflufenican ; dimethachlore ; dimethenamide ; dimethenamid P ; dimethipin ; dimethoate ; dimethomorphe ; diniconazole ; dinocap ;; diphacinone ; diphenylamine; diquat dibromure ; dithianon ; diuron ; dodemorphe acetate ;doguadine ; endosulfan ; epoxiconazole ; EPTC ; esfenvalerate ; ethephon ; ethofumesate ;ethoprophos ; ethoprophos ; ethoxyquine ; etofenprox; etoxazole ; famoxadone ; fenamidone ; fenarimol ; fenazaquin ; fenbuconazole ; fenbutatin oxyde ; fenclorim ; fenhexamid ; fenitrothion ;fenitrothion ; fenoxaprop-P-ethyl ; fenoxycarbe ; fenpropidine ; fenpropimorphe ; fenpyroximate ; fipronil ; flazasulfuron ; flocoumafen ; florasulam ; fluazifop P butyl ; fluazinam ; fludioxonyl ; flufenacet ; flufenoxuron ; flumioxazine ; flupyrsulfuron methyle ; fluquinconazole ; flurochloridone ; fluroxypyr : methylheptyl ester ; flurprimidol ; flurtamone ; flusilazole ; flutolanil ; flutriafol ; folpel; fomesafen ; foramsulfuron ; formaldehyde ; formetanate ; fosetyl-al ;fosthiazate ; gibberelline A4 A7 ; glufosinate ammonium ; glutaraldehyde ; glyphosate ; guazatine triacetate ; haloxyfop-R : ester methylique ; hexaconazole ; hexazinone ; hexythiazox ; hydrazide maleique ; hymexazol ;imazalil ; imazamethabenz ; imazamox ; imazaquine ; imidaclopride ; indoxacarbe ; iodosulfuron ; ioxynil ; ioxynil octanoate ; iprodione ; iprovalicarbe ; isoproturon ; isothiocyanate de methyl ; isoxaben ; isoxadifen ethyl ; isoxaflutole ; kresoxim methyl ; lambda cyhalothrine ; laminarine ; lenacile ; linuron ; lufenuron ; malathion ; mancozebe ; manebe ; MCPA ; MCPB ; mecoprop ; ecoprop-P ; mefenpyr diethyl ; mefluidide ; mepanipyrim ; mepiquat-chlorure ; mercaptodimethur ; mercaptodimethur ; mesosulfuron methyl ; mesotrione ; metalaxyl ; metalaxyl-M ; metaldehyde ; metam-sodium ; metamitrone ; metazachlore ; metconazole, methabenzthiazuron ; methamidophos ; methomyl ; methoxyfenozide ; metiram-zinc ; metobromuron ; metosulam ; metoxuron ; metribuzine ; metsulfuron methyle ; milbectine ; molinate ; monolinuron ; myclobutanil ; naled ; napropamide ; naptalame ; nicosulfuron ; oryzalin ; oxadiargyl ; oxadiazon ; oxamyl ; oxydemetonmethyle ; oxyfluorfene ; paclobutrazol ; paraquat dichlorure ; penconazole ; pencycuron ; pendimethaline ; phenamiphos ; phenmediphame ; phosalone ; phosmet ; phosphate ferrique ; piclorame ; piclorame : ester isooctylique ; piclorame : sel de potassium ; piclorame : sel d'isopropylamine ; picolinafen ; picoxystrobine ; pretilachlore ; prochloraz ; prochloraze manganèse ; procymidone ; prohexadione-calcium ; prometryne ; propachlore ; propamocarbe ; propanil ; propaquizafop ; propargite ; ropetamphos ; propiconazol ; propinebe ; propoxycarbazone sodium ; propyzamide ; prosulfocarbe ; prosulfuron ; pymetrozine ; pyraclostrobine ; pyraflufen ethyl ; pyridabene ; pyridate ; pyrimethanil ; pyrimicarbe ; pyrimiphos-methyl ; pyriproxyfen; quinmerac ; quinoxyfen ; quizalofop-ethyl : isomere D ; rimsulfuron ; rotenone ; S-metolachlore ; scilliroside ; silthiopham ; sintofen ; soufre sublime ; spinosad ; spiroxamine ; sulcotrione ; sulfamate d'ammonium ; sulfosate ; sulfosulfuron ; taufluvalinate ; tebuconazole ; tebufenozide ; tebufenpyrad ; teflubenzuron ; tefluthrine ; temephos ; tepraloxydim ; terbacile ; tetraconazole ; tetradifon ; thiabendazole ; thiacloprid ; thifensulfuron methyle ; thiocyanate d'ammonium ; thiodicarbe ; thiophanate-methyl ; thirame ; tolclophos methyle ; tolylfluanide ; tralkoxydime ; triadimenol ; triallate ; triasulfuron ; triazamate ; triazoxide ; tribenuron-methyle ; trichloracetate de sodium ; trichlorfon ; trichlorfon ; triclopyr ; triclopyr : sel de triethylamine ; triclopyr butoxy ethyl ester ; trifloxystrobine ; triflumuron ; trifluraline ; trifluraline ; triflusulfuron-methyle ; trinexapac-ethyl ; triticonazole ; vinchlozoline ; zetacypermethrine; zirame ; zoxamide ; et leurs mélanges

En particulier, le procédé objet de l'invention permet une dégradation particulièrement efficace des herbicides appartenant à la famille des flazasulfonylurées, et en particulier du metsulfuron méthyle, et du flazasulfuron.

Par « agent oxydant », on entend au sens de la présente invention une molécule ou une composition capable de fixer les électrons.

De préférence, la quantité d'agent oxydant mise en contact avec l'effluent phytosanitaire est telle que le nombre de moles de l'agent oxydant par rapport au nombre de moles de la matière active contenue dans l'effluent phytosanitaire est de 1,3. 10² à 3.10⁵.

Le procédé de traitement objet de l'invention peut être mis en oeuvre dans le domaine agricole, pour la viticulture, l'arboriculture, le maraîchage, l'horticulture, et de manière générale dans tous les domaines agricoles dans lesquels des matériels de pulvérisation de produits phytosanitaires sont utilisés.

Le demandeur a montré dans les exemples que le procédé de traitement objet de l'invention permet de réduire la concentration en produit phytosanitaire d'un effluent jusqu'à disparition complète du produit phytosanitaire en 10 minutes.

Ainsi, le procédé de traitement défini ci-dessus, peut comprendre la mise en contact d'un effluent phytosanitaire avec un agent oxydant pendant au moins 10 minutes, et de préférence au moins 20 minutes.

De préférence, le procédé de traitement objet de l'invention, comprend la mise en contact d'un effluent phytosanitaire avec un agent oxydant pendant 1 heure ou moins.

De manière tout à fait préférée, le procédé de traitement comprend la mise en contact d'un effluent phytosanitaire avec un agent oxydant choisi parmi le dioxyde de chlore et le dichloroisocyanurate de sodium pendant au moins vingt minutes.

Alternativement, le procédé de traitement objet de l'invention comprend la mise en contact dudit effluent phytosanitaire le percarbonate de sodium pendant au moins 10 minutes.

Comparativement aux procédés de traitements connus, le procédé objet de l'invention est simple et peut consister uniquement en la mise en contact d'un effluent phytosanitaire avec un agent oxydant.

Ce procédé de traitement peut être mis en oeuvre par mise en contact d'un effluent phytosanitaire avec un agent oxydant, au sein de la cuve d'un matériel de pulvérisation.

La suite de la description se réfère aux exemples non limitatifs suivants.

### EXEMPLES

### MATERIELS ET METHODES GENERAUX DES EXEMPLES.

### 1. Molécules cibles étudiées.

### a) Metsulfuron-méthyle :

Les caractéristiques de la molécule sont les suivantes :
Nom chimique :
   méthyl-2-[[(4-méthoxy-6-méthyl-1,3,5-triazin-2-yl)aminocarbonyl]-aminosulfoyl] benzoate.
   Formule brute : C₁₄H₁₅N₅O₆S.

### b) Flazasulfuron

Les caractéristiques de la molécule sont les suivantes :
Nom chimique :
   N-[[('4,6-diméthoxy-2-pyrimidinyl)amino]carbonyl]-3-(trifluorométhyl)-2-pyridine-sulfonamide.
   Formule brute : C₁₃H₁₂N₅O₅F₃S

### 2. Conditions opératoires

Le suivi de la dégradation des herbicides ci-dessus a été réalisé par chromatographie en phase liquide avec des conditions chromatographiques identiques pour les deux molécules, et qui sont les suivantes :
Colonne : Stability RP Pesticides 5µm ; 4,6mm ; 250 mm.
Appareillage : Pompe : P 4000 Thermo
   Passeur automatique : AS 3000 Thermo,
   Détecteur : barrette de diodes UV 6000 Thermo
Phase éluante : 50% eau + acide trifluoroacétique pH 2,5 50% acétonitrile.
Elution : Mode isocratique
Débit : 1 ml/min.
Plage de longueur d'onde : 200 à 360 nm
Temps d'analyse : 15 minutes
Volume injecté : 2 µl
Temps de rétention approximatif :
   - Metsulfuron méthyle : 6,6 minutes
   - Flazasulfuron : 11, 8 minutes.

Les longueurs d'onde d'absorption maximale spécifiques de chaque molécule sont :
Metsulfuron méthyle : 224 nm
Flazasulfuron : 240 nm
Les limites de détection obtenues dans ces conditions analytique sont :
Metsulfuron : 48 µg/L
Flazasulfuron : 68 µg/L

### 2.1 Mise en oeuvre de la dégradation

Le déroulement général de la dégradation et de son suivi s'est fait de la façon suivante :

Compte-tenu du fait que le temps d'analyse est de 15 minutes et que le temps de dégradation est fixé au maximum à 1 heure, les opérations se sont déroulées directement dans le passeur automatique. A t = 0, le réactif est ajouté à la solution d'herbicide dans un flacon de passeur automatique et la solution ainsi obtenue est injectée tous les quarts d'heure jusqu'à 1 heure. La dégradation est donc suivie avec 5 points de mesure.

### 2.2 Préparation des solutions d'herbicides et de réactif.

### 2.2.1. Solutions d'herbicides.

### a) Metsulfuron méthyle

La molécule pure a été obtenue auprès de la Société Riedel de Haën, sa pureté est de 99,4%. Les solutions ont été préparées dans l'eau.

La concentration de la solution à traiter est d'environ 100 mg/l.

### b) Flazasulfuron

La molécule pure n'étant pas facilement disponible commercialement, celle-ci a été obtenue par extraction et recristallisation à partir du produit commercial Katana suivant le protocole décrit par C . Bertrand et al. (J. Agric Food Chem. 2003, 51, 7717-7721). La molécule ainsi obtenue est pure à 96%. Le Flazasulfuron n'étant pas soluble dans l'eau, les solutions ont été préparées avec un mélange 50/50 eau/acétonitrile.

La concentration de la solution à traiter est d'environ 90 ml/l. Cela correspond à la concentration de Flazasulfuron dans une solution à 50g de Katana dans 150 litres.

### c) Solution de Katana.

La dégradation a été testée sur une solution de Katana à 50g pour 150 litres. Le Katana, a été obtenu auprès de Zeneca Sopra, et contient du flazasulfuron.

Compte-tenu de la solubilité du Flazasulfuron, les analyses se sont déroulées en ajoutant de l'acétonitrile (50%).

### 2.2.2. Solution de réactifs

Les réactifs mis en jeu sont de deux sortes, les produits solides et des solutions commerciales ou préparées en laboratoire comme résumées dans le tableau ci-après.

**TABLEAU 1**

| **Produit (Nom chimique ou commercial)** | **Forme** | **Nature** |
|---|---|---|
| **Duo X 3** | **Liquide** | **CIO**₂ |
| **Dichloroisocyanurate de sodium (DCIC)** | **Solide** | **Hypochlorite** |
| **Percarbonate de sodium** | **Solide** | **Na₂**CO**₃** |

Des essais préliminaires ont permis de cibler la concentration des différents réactifs par rapport à celle de la solution à traiter.

La quantité de réactif mise en jeu est alors modulée par le biais de dilution et du volume de solution de réactif ajouté à la solution à traiter.

### 2.3 Contrôle de la dégradation

Le contrôle du niveau de dégradation s'effectue en mesurant l'aire du pic de chaque molécule d'herbicide pour chaque injection.

L'évolution de la dégradation peut ainsi être quantifiée en reportant l'aire du pic de l'herbicide en fonction du temps.

### 3. Résultats

Les résultats obtenus pour le Metsulfuron Méthyle, le Flazasulfuron et le Katana sont décrits ci-dessous dans les exemples 1, 2 et 3, ils regroupent pour chaque herbicide un tableau de données correspondant à des conditions permettant la dégradation en moins d'une heure. Dans les tableaux de données sont indiqués les volumes mis en jeu et les nombres de moles d'herbicide (metsulfuron, flazasulfuron, ou katana) et d'agent oxydant (nombre de moles réactif), et lorsque ce dernier est chloré, le nombre de mole de chlore actif. Le rapport du nombre de mole d'agent oxydant par rapport au nombre de mole d'herbicide est également indiqué (rapport molaire). L'expression en mole permet de pouvoir comparer l'efficacité des agents oxydants en fonction des quantités mises en jeu.

### EXEMPLE 1 - Dégradation du Metsulfuron Méthyle

Les résultats obtenus (Tableaux 2 à 4) montrent pour le Metsulfuron que les réactifs chlorés sont très efficaces pour le traitement des effluents phytosanitaires et permettent d'atteindre une dégradation complète de l'effluent en moins d'une heure et même en moins de vingt minutes. Parmi les réactifs chlorés, le dioxyde de chlore est le plus actif avec le rapport molaire le plus faible et un temps de réaction très court.

### EXEMPLE 2 - Dégradation du Flazasulfuron

Les résultats obtenus sur le Flazasulfuron (Tableaux 5 et 6) sont assez similaires à ceux obtenus pour le Metsulfuron. En effet, les réactifs chlorés sont les plus efficaces pour dégrader cet effluent phytosanitaire, et en particulier le dioxyde de chlore s'avère très actif.

### EXEMPLE 3 - Dégradation du Katana, produit commercialisé Par Zeneca Sopra, et contenant du flazasulfuron

Les réactifs chlorés sont les plus efficaces pour dégrader cet effluent phytosanitaire, (tableaux 7 et 8) et en particulier le dioxyde de chlore, et le dichloroisocyanurate de sodium s'avèrent très actifs. Ces agents oxydants permettent en effet de dégrader le Katana en moins d'une heure, et même en moins de 20 minutes ou moins de 10 minutes.
Ainsi, les quantités de réactifs mis en jeu pour dégrader 150 litres de solution de Katana (50g de Katana pour 150 litres d'eau) sont :
- 100g de dichloroisocyanurate de sodium,
- 2,25 litres de dioxyde de chlore.

**TABLEAU 2**

| **Action du DUO X3 sur le Metsulfuron** | | | | | | | |
|---|---|---|---|---|---|---|---|
| Vol réactif (ml) | Vol Metsulfuron (ml) | Nombre de mole CI actif | Nombre de mole Metsulfuron | Rapport molaire | Temps (min) | Surface | Metsulfuron restant |
| | | | | | 0 | 2464657 | 100,0% |
| | | | | | 5 | 576067 | 23,4% |
| 2,54 | 0,012 | 1 | 3,61 E-07 | 2,77E-07 | 20 | 2116 | 0,1 % |
| | | | | | 35 | 0 | 0,0% |
| | | | | | 50 | 0 | 0,0% |
| | | | | | 65 | 0 | 0,0% |

**TABLEAU 3**

| **Action du DCIC sur le Metsulfuron** | | | | | | | |
|---|---|---|---|---|---|---|---|
| Vol réactif (ml) | Vol Metsulfuron (ml) | Nombre de mole Réactif | Nombre de mole Metsulfuron | Rapport molaire | Temps (min) | Surface | Metsulfuron restant |
| | | | | | 0 | 2244003 | 100,0% |
| | | | | | 5 | 700046 | 31,2% |
| 0,1 | 1 | 8,18E-09 | 2,80E-07 | 2,92E-02 | 20 | 48076 | 2,1% |
| | | | | | 35 | 22202 | 1,0% |
| | | | | | 50 | 21206 | 0,9% |
| | | | | | 65 | 10645 | 0,5% |

**TABLEAU 4**

| **Action du percarbonate de sodium sur le Metsulfuron** | | | | | | | |
|---|---|---|---|---|---|---|---|
| Vol réactif (ml) | Vol Metsulfuron (ml) | Nombre de mole Réactif | Nombre de mole Metsulfuron | Rapport molaire | Temps (min) | Surface | Metsulfuron restant |
| | | | | | 0 | 3516127 | 100,0% |
| | | | | | 5 | 383452 | 10,9% |
| 0,5 | 0,5 | 1,50E-04 | 7,60E-08 | 1,97E+03 | 20 | 269298 | 7,7% |
| | | | | | 35 | 359563 | 10,2% |
| | | | | | 50 | 387875 | 11,0% |
| | | | | | 65 | 304601 | 8,7% |

**TABLEAU 5**

| **Action du DUO X3 sur le Flazasulfuron** | | | | | | | |
|---|---|---|---|---|---|---|---|
| Vol réactif (ml) | Vol Flazasulfuron (ml) | Nombre de mole CI actif | Nombre de mole Flazasulfuron | Rapport molaire | Temps (min) | Surface | Flazasulfuron restant |
| | | | | | 0 | 1867276 | 100,0% |
| 0,012 | 0,8 | 4,50E-07 | 1,70E-07 | 2,65E+00 | 5 | 30574 | 1,6% |
| | | | | | 20 | 11658 | 0,6% |
| | | | | | 35 | 2485 | 0,1% |
| | | | | | 50 | 0 | 0,0% |
| | | | | | 65 | 0 | 0,0% |

**TABLEAU 6**

| **Action du DCIC sur le Flazasulfuron** | | | | | | | |
|---|---|---|---|---|---|---|---|
| Vol réactif (ml) | Vol Flazasulfuron (ml) | Nombre de mole CI actif | Nombre de mole Flazasulfuron | Rapport molaire | Temps (min) | Surface | Flazasulfuron restant |
| | | | | | 0 | 1579190 | 100,0% |
| | | | | | 5 | 305490 | 19,3% |
| 0,1 1 | | 8,10E-09 | 1,90E-07 | 4,26E-02 | 20 | 10950 | 0,7% |
| | | | | | 35 | 3954 | 0,3% |
| | | | | | 50 | 0 | 0,0% |
| | | | | | 65 | 0 | 0,0% |

**TABLEAU 7**

| **Action du DUO X3 sur le Katana** | | | | | | | |
|---|---|---|---|---|---|---|---|
| Vol réactif (ml) | Vol Katana (ml) | Nombre de mole CI actif | Nombre de mole Flazasulfuron | Rapport molaire | Temps (min) | Surface | Flazasulfuron restant |
| | | | | | 0 | 573891 | 100,0% |
| | | | | | 5 | 92590 | 16,1% |
| 0,012 | 0,8 | 0,012 | 0,8 | 0,015 | 25 | 1119 | 0,2% |
| | | | | | 45 | 0 | 0,0% |
| | | | | | 65 | 0 | 0,0% |

**TABLEAU 8**

| **Action du DCIC sur le Katana** | | | | | | | |
|---|---|---|---|---|---|---|---|
| Vol réactif (ml) | Vol Katana (ml) | Nombre de mole CI actif | Nombre de mole Flazasulfuron | Rapport molaire | Temps (min) | Surface | Flazasulfuron restant |
| | | | | | 0 | 96882 | 100,0% |
| | | | | | 5 | 14638 | 15,1% |
| 0,5 | 0,5 | 2,25E-07 | 5,14E-08 | 4,38E+00 | 20 | 2163 | 2,2% |
| | | | | | 35 | 680 | 0,7% |
| | | | | | 50 | 0 | 0,0% |
| | | | | | 60 | 0 | 0,0% |

## Revendications

1. Procédé de traitement d'un effluent phytosanitaire comprenant au moins une matière activie choisie dans la famille des sulfonylurées, **caractérisé en ce qu'**il consiste uniquement à mettre en contact ledit effluent phytosanitaire avec un agent oxydant choisi parmi le dioxyde de chlore, le dichloroisocyanurate de sodium, le percarbonate de sodium et leurs mélanges.

2. Procédé de traitement selon la revendication 1, **caractérisé en ce que** la quantité d'agent oxydant mise en contact avec l'effluent phytosanitaire est telle que le nombre de moles de l'agent oxydant par rapport au nombre de moles de la matière active contenue dans l'effluent phytosanitaire est de 1,3. 10² à 3.10⁵.

3. Procédé de traitement selon la revendication 1 ou 2, **caractérisé en ce qu'**il comprend la mise en contact d'un effluent phytosanitaire avec un agent oxydant pendant au moins 10 minutes, et de préférence au moins 20 minutes.

4. Procédé de traitement selon l'une quelconque des revendications 1 à 3, **caractérisé en ce qu'**il comprend la mise en contact d'un effluent phytosanitaire avec un agent oxydant pendant 1 heure ou moins.

5. Procédé de traitement selon l'une quelconque des revendications 1 à 4, **caractérisé en ce qu'**il comprend la mise en contact d'un effluent phytosanitaire avec un agent oxydant choisi parmi le dichloroisocyanurate de sodium, et le dioxyde de chlore et leurs mélanges pendant au moins 20 minutes.

6. Procédé de traitement d'un effluent phytosanitaire selon selon l'une quelconque des revendications 1 à 4, **caractérisé en ce qu'**il comprend la mise en contact dudit effluent phytosanitaire avec le percarbonate de sodium, pendant au moins 10 minutes.

7. Procédé de traitement selon l'une quelconque des revendications 1 à 6, **caractérisé en ce que** l'effluent phytosanitaire est choisi parmi un fond de cuve, une bouillie phytosanitaire non utilisable, une eau de nettoyage d'un matériel de pulvérisation, une eau, un effluent ou un déchet ayant été en contact avec un produit phytosanitaire.

8. Procédé de traitement selon l'une quelconque des revendications 1 à 7, **caractérisé en ce que** l'effluent phytosanitaire est constitué par une eau de lavage ou de rinçage récupérée dans un bac de rétention, de dessication ou de décomposition.
